**Europäisches Patentamt**

**European Patent Office**

**Office européen des brevets**

(19)

(11) Veröffentlichungsnummer: **0 077 018**
**A1**

(12) # EUROPÄISCHE PATENTANMELDUNG

(21) Anmeldenummer: 82109238.4

(51) Int. Cl.³: **G 01 T 1/164**, G 01 V 5/00

(22) Anmeldetag: 06.10.82

(30) Priorität: 09.10.81 DE 3140145

(43) Veröffentlichungstag der Anmeldung: 20.04.83
Patentblatt 83/16

(84) Benannte Vertragsstaaten: BE DE FR GB

(71) Anmelder: Heimann GMBH, Weher Köppel 6,
D-6200 Wiesbaden 1 (DE)

(72) Erfinder: Dönges, Gerhard, Dipl.-Ing., Am Markt 1,
D-6209 Heidenrod-Kemel (DE)
Erfinder: Herwig, Thomas, Dipl.-Phys., Wiesenstrasse 8,
D-6228 Eltville-Martinsthal (DE)
Erfinder: Kunze, Claus, Dr. Ing., Im Sonnental 19,
D-6204 Taunusstein 4 (DE)

(74) Vertreter: Mehl, Ernst, Dipl.-Ing. et al, Postfach 22 01 76,
D-8000 München 22 (DE)

(54) **Vorrichtung zur Herstellung eines Röntgenbildes von Körpern.**

(57) In einer Vorrichtung zur Herstellung eines Röntgenbildes von Körpern, insbesondere von Gepäckstücken, wird bei kontinuierlicher Bewegung des Körpers ein schmaler Streifen durchleuchtet. In der Strahlungsrichtung hinter dem Gepäckstück sind in den Strahlengang eine oder mehrere parallele Reihen (5 bis 7) von Detektoren angeordnet, wobei die Detektoren auf sichtbares Licht ansprechen. Vor jedem Detektor befindet sich ein monokristalliner Szintillator von der Grösse eines Bildpunktes. Benachbarte parallele Reihen (5 bis 7) von Detektoren sind gegeneinander seitlich soweit versetzt, dass in einer Projektion in Laufrichtung (A) der Körper zwischen den wirksamen Flächen (4) Szintillatoren keine Zwischenräume vorhanden sind. Die Erfindung eignet sich für Gepäckprüfanlagen.

HEIMANN GMBH WIESBADEN      Unser Zeichen 0077018
                            VPA 81 P 8038 E

Vorrichtung zur Herstellung eines Röntgenbildes von
Körpern.

---

Die vorliegende Erfindung betrifft eine Vorrichtung zur
Herstellung von Röntgenbildern von Körpern gemäß dem
Oberbegriff des Patentanspruchs 1. In derartigen Vorrichtungen wird üblicherweise die Röntgenstrahlung hinter dem
Körper durch polykristalline Leuchtschirme in sichtbares
Licht umgewandelt, welches dann ein auswertbares Bild erben soll.

Polykristalline Leuchtschirme besitzen jedoch eine Struktur mit hohem Eigenabsorptionsgrad für das Licht, das sie
bei der Röntgenbestrahlung emmitieren. Deshalb dürfen
solche Schichten nur relativ dünn ausgeführt sein, eine
näherungsweise vollständige Absorption der Röntgenstrahlung ist nicht erreichbar. Dadurch haben derartige Leuchtschirme einen geringen Wirkungsgrad. Außerdem sind die
bekannten Detektoren, insbesondere die Photodioden, gegenüber Röntgenstrahlung empfindlich. Die polykristallinen
Leuchtschirme stellen wegen der zu fordernden geringen
Dicke einen unzureichenden Schutz für die dahinter befindlichen optischen Sensoren dar. Außerdem zeigen Leuchtschirme durch die auftretende Querstreuung des Lichtes
eine gegenüber der aus den Abmessungen des einzelnen Bildpunktes zu erwartenden geringere optische Auflösung.

Die Aufgabe, die der vorliegenden Erfindung zugrundeliegt,
besteht darin, die Empfindlichkeit und die Auflösung der
bekannten Gepäckprüfanlagen mit möglichst geringem Aufwand
zu erhöhen und die Belastung der Gepäckstücke durch Röntgenstrahlung gleichzeitig zu verringern.

Mhs 1 Lk /8.10.1981

Diese Aufgabe wird durch die kennzeichnenden Merkmale
des Patentanspruchs 1 gelöst.

Die vollständige Absorption der Röntgenstrahlung einerseits und die Lichtdurchlässigkeit des Szintillators andererseits ermöglichen sowohl eine Verringerung der Röntgenbelastung als auch eine erhöhte Lichtausbeute. Die
Verwendung einzelner Szintillationskristalle verhindert
zusätzlich eine Querstreuung des Lichtes und erhöht somit
die optische Auflösung. Wegen der günstigen Lichtausbeute
können vorteilh. einfache handelsübliche Photodioden mit Kunststoffgehäuse als Detektoren dienen. Dadurch kann der Aufwand
klein gehalten werden. Der Szintillator weist vorteilhaft
eine Dicke auf, welche eine annähernd vollständige Absorption der verwendeten Röntgenstrahlung gewährleistet.
Dadurch wird eine besonders hohe Lichtausbeute und ein
vollständiger Schutz der Dioden vor Röntgenstrahlung
erreicht.

Der Szintilator ist vorteilhaft mit einem lichtdurchlässigen Kleber mit großem Brechungsindex zumindest im Bereich der optischen wirksamen Fläche des Detektors verklebt, die übrigen Oberflächen des Szintillators sind vorteilhaft mit einer für die Röntgenstrahlung durchlässigen,
sichtbares Licht dagegen reflektierenden Schicht überzogen.
Die reflektierende Schicht ist vorteilhaft ein mit
Titandioxid versetzter Kunststoffkleber, die Szintillatoren und die Detektoren sind vorteilhaft durch diesen Kleber in Halteschienen eingeklebt. Als Kleber eignet sich
insbesondere Epoxydharz. Als Halteschienen können geeignete, im Handel erhältliche Metallprofile verwendet werden.

An die optische Auflösung werden in der Praxis hohe Anforderungen gestellt, da unter anderem feinste Metalldrähte von beispielsweise 0,1mm Durchmesser oder weniger einwandfrei erkannt werden sollen. Dies ist jedoch ~~mit~~ ~~handelsüblichen Dioden~~ nicht ohne weiteres möglich, da gerade bei den besonders kleinen Ausführungsformen durch die Dicke der Umhüllung der Szintillatoren der gegens. Abstand zweier Meßpunkte größer ist, als die kleinsten zu erfassenden Gegenstände. Hierzu wird vorteilhaft eine Ausführungsform eingesetzt, bei der zwei oder mehrere Reihen von Detektoren und mit diesen verbundenen Szintillatoren nebeneinander angeordnet sind, bei der jede Reihe gegenüber der oder den unmittelbar benachbarten Reihen in ihrer Längsrichtung versetzt ist und bei der in einer Projektion in Laufrichtung der Körper zwischen den wirksamen Flächen der Szintillatoren keine Zwischenräume vorhanden sind. Eine Verkleinerung der Fläche erhöht schon für sich genommen die Auflösung, indem die relative Helligkeitsänderung bei gleicher Objektgröße mit abnehmenden Abmessungen der optisch wirksamen Fläche des Detektors zunimmt. Durch die vorgeschlagene Anordnung von Detektoren wird darüber hinaus in einer erfindungsgemäßen Vorrichtung grundsätzlich ein beliebig dünner Gegenstand erfaßt. Bei dieser Ausführungsform kommt es nur auf die Projektion des Gegenstandes in Laufrichtung der Körper an, in Projektionen in anderen Richtungen können zwischen den wirksamen Flächen der Szintillatoren beliebige Zwischenräume vorhanden sein. Beim Durchlaufen der Vorrichtung wird der Körper mit Sicherheit irgendwann von einem Detektor erfaßt.

Um eine eindeutige Auswertung auch bei der Ermittlung feinster Körper zu ermöglichen, wird eine erfindungsgemäße Vorrichtung mit n je einer Spalte von Bildpunkten entsprechenden Reihen von Detektoren so ausgestaltet, daß die Meßpunkte jeder Spalte in Laufrichtung der Körper nacheinander mit einer derartigen zeitlichen Verzögerung abgefragt werden, daß die Meßwerte jeder Spalte an genau derselben Stelle des Körpers abgenommen werden.

So entsteht nach dem Abfragen der Speichereinrichtungen ein lückenloses, klares Bild auch feinster Körper. Die Größe der erkennbaren Körper kann dabei kleiner sein, als die wirksame Fläche eines Szintillators. Derartige Körper können zwar den Detektor nicht vollständig abschatten, erzeugen aber trotzdem einen Helligkeitsunterschied im Detektor.

Die Erfindung wird nun anhand von drei Figuren näher erläutert. Sie ist nicht auf die in den Figuren beschriebenen Beispiele beschränkt.

Die Figuren zeigen verschiedene Anordnungen von Detektoren schematisch.

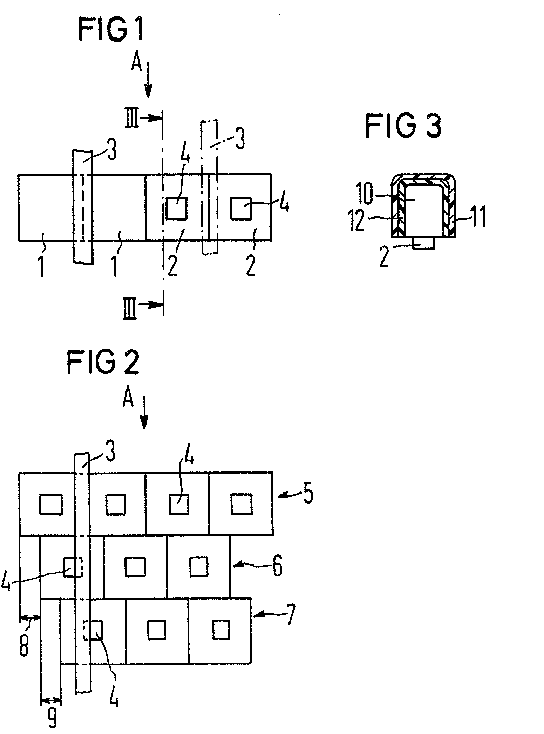

In Fig. 1 bilden die Detektoren 1 und 2 eine Reihe. Die Detektoren 1 weisen eine optisch wirksame Fläche auf, die die gesamte Detektoroberfläche bedeckt* Ein dünner Draht 3 liegt über der Grenze zwischen zwei Detektoren 1. Dieser Draht ruft in beiden Detektoren eine teilweise Abschattung hervor, er wird von beiden Detektoren durch eine Helligkeitsabschwächung angezeigt. Die Detektoren 2 weisen optisch wirksame Flächen 4 auf, welche nur ein Drittel der Kantenlänge des Detektors besitzen.* Der Draht 3 würde durch derartige Detektoren nicht erfaßt, sofern er in der Bewegungsrichtung A der Körper zwischen den optisch wirksamen Flächen der Detektoren hindurchlaufen würde. *Darüber ist jeweils ein deckungsgleicher Szintillator angeordnet.

In dem Ausführungsbeispiel gemäß Fig. 2 wird der Draht 3 auf jeden Fall von zumindest einer optisch wirksamen Fläche 4 eines Detektors der Reihen 5, 6 oder 7 erfaßt. Im vorliegenden Beispiel wird der Draht 3 von den wirksamen Flächen 4 bzw. von den Szintillatoren der Reihen 6 und 7 erfaßt.

Ein nicht in der Laufrichtung A der Körper verlaufender Draht würde ebenfalls sicher erfaßt, da er im Zuge der Bewegung zu irgendeinem Zeitpunkt mit Sicherheit eine wirksame Fläche eines Szintillators abschatten würde.

Fig. 3 zeigt einen Schnitt durch eine Reihe von Detektoren in teilweise geschnittener Ansicht. In eine Halteschiene 11 sind mittels eines reflektierenden Klebers 12 Szintillatoren 10 eingeklebt. Ein Detektor 2 ist jeweils unter einem monokristallinen Szintillator 10 angeordnet. Der lichtreflektierende, jedoch für Röntgenstrahlung durchlässige Kleber 12 umhüllt den Szintillator 10 von allen Seiten mit Ausnahme der auf der optisch wirksamen Fläche des Detektors aufliegenden Fläche. Der Szintillator 10 ist mit dem Detektor 2 durch einen lichtdurchlässigen Kleber, dessen Brechungsindex dem Brechungsindex des Szintillators möglichst nahekommt, verklebt. Als Detektor 2 wird vorzugsweise eine handelsübliche Photodiode eingesetzt.

Der Abstand zwischen den wirksamen Flächen der Szintillatoren und damit die Summe der Versetzungen 8 zwischen den Reihen 5 und 6 der Versetzung 9 zwischen den Reihen 6 und 7 ist durch die Wandstärke des Klebers 12, nicht aber durch die Wandstärke der Halteschiene 11 bestimmt, da diese zwar in Laufrichtung der Körper, nicht aber senkrecht zu dieser Laufrichtung überschritten werden muß. Die Laufschiene kann ein U-Profil aus einem für Röntgenstrahlung durchlässigen Material, z.B. Kunststoff, bestehen. Fertigungstechnisch besonders einfach ist jedoch eine Ausführungsform, bei der Halteschienen, die z.B. aus Aluminium bestehen, nur auf die beiden nicht von Röntgenstrahlung durchsetzten Seitenflächen der Reihen 5,6 aufgeklebt sind. Die Verklebung erfolgt vorteilhaft durch den reflektierenden Kleber 12.

7 Patentansprüche 3 Figuren

## Patentansprüche

1. Vorrichtung zur Herstellung von Röntgenbildern von Körpern, insbesondere von Gepäckstücken in einer Gepäckprüfanlage, in der die Körper relativ zu einer Röntgenstrahlungsquelle bewegt werden können, in der die Röntgenstrahlung einen schmalen Streifen durchleuchtet, in der in Richtung der Röntgenstrahlung hinter den Körpern Einrichtungen zur Umwandlung der Röntgenstrahlung in sichtbares Licht und hinter diesen eine Reihe von Detektoren angeordnet sind, welche die Intensität des sichtbaren Lichtes und damit der Röntgenstrahlung in ihrer Verteilung über den durchleuchteten Streifen messen, die Meßwerte in einen Speicher weitergeben und in der aus den Meßwerten ein sichtbares Bild aus Bildpunkten mit einer den Meßwerten der Detektoren entsprechenden Helligkeit erzeugt wird, d a d u r c h  g e k e n n z e i c h n e t, daß als Einrichtungen zur Umwandlung der Röntgenstrahlung in sichtbares Licht vor jedem Detektor ein gesonderter monokristalliner Szintillator mit einem hohen optischen Transmissionskoeffizienten angeordnet ist.

2. Vorrichtung nach Anspruch 1, d a d u r c h  g e k e n n z e i c h n e t, daß als Detektoren einfache Photodioden mit Kunststoffgehäuse oder vorgefertigte Zeilen von Photodioden dienen.

3. Vorrichtung nach einem der Ansprüche 1 oder 2, d a d u r c h  g e k e n n z e i c h n e t, daß der Szintillator eine Dicke aufweist, welche eine annähernd vollständige Absorption der verwendeten Röntgenstrahlung gewährleistet.

4. Vorrichtung nach einem der Ansprüche 1 oder 2, d a d u r c h  g e k e n n z e i c h n e t, daß der Szintillator mit einem lichtdurchlässigen Kleber mit großem Brechungsindex zumindest im Bereich der optisch wirksamen Fläche des Photodetektors verklebt ist und daß die übrigen Oberflächen des Szintillators mit einer für Röntgenstrahlung durchlässigen, sichtbares Licht dagegen reflektierenden Schicht überzogen sind.

5. Vorrichtung nach einem der Ansprüche 1 bis 4, d a - d u r c h   g e k e n n z e i c h n e t, daß als reflektierende Schicht ein mit Titandioxid versetzter Kunststoffkleber dient und daß die Szintillatoren und die Detektoren durch diesen Kleber in Halteschienen eingeklebt sind.

6. Vorrichtung nach einem der Ansprüche 1 bis 5, d a - d u r c h   g e k e n n z e i c h n e t, daß zwei oder mehrer Reihen von Detektoren und mit diesen verbundene Szintillatoren nebeneinander angeordnet sind, daß jede Reihe gegenüber der oder den unmittelbar benachbarten Reihen in ihrer Längsrichtung versetzt ist und daß in einer Projektion in Laufrichtung der Körper zwischen den wirksamen Flächen der Szintillatoren keine Zwischenräume vorhanden sind.

7. Vorrichtung nach Anspruch 6, d a d u r c h   g e - k e n n z e i c h n e t, daß n je einer Spalte von Bildpunkten entsprechende Reihen von Detektoren vorgesehen sind, daß die Meßwerte jeder Spalte in Laufrichtung der Körper nacheinander mit einer derartigen zeitlichen Verschiebung abgefragt werden, daß die Meßwerte jeder Spalte an genau derselben Stelle des Körpers abgenommen werden.

0077018

**FIG 1**

A

**FIG 3**

3    3

4    4

III    III

1    1    2    2

10

12    11

2

**FIG 2**

A

3    4    5

4    6

4    7

8

9    4

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 01 T 1/164 |
| Y | DE-A-2 532 218 (HEIMANN GmbH) * Seite 1, Zeilen 3-6; Seite 2, Zeile 25 - Seite 4, Zeile 7; Seite 5, Zeile 29 - Seite 6, Zeile 14; Figuren 1 und 4 * | 1,4 | G 01 V 5/00 |
| | --- | | |
| Y | GB-A-2 056 671 (AMERICAN SCIENCES & ENGINEERING INC.) * Seite 1, Zeilen 5-18, 49-62 und 99-114; Seite 2, Zeilen 20-41 und Zeile 73 - Seite 3, Zeile 24; Seite 3, Zeilen 49-63 und 102-115; Seite 4, Zeile 92 - Seite 5, Zeile 6; Seite 5, Zeilen 17-38; Figuren 1,2,6 * | 1-3,6 | |
| | --- | | |
| A | DE-A-2 262 561 (BAIRD-ATOMIC INC.) * Seite 2, Zeilen 9-30; Seite 3, Zeile 15 - Seite 4, Zeile 29; Seite 6, Zeilen 7-17; Figuren 1,2 * | 1,6,7 | RECHERCHIERTE SACHGEBIETE (Int. Cl. ³) |
| | --- | | G 01 T |
| A | US-A-3 936 645 (A.H. IVERSEN) * Zusammenfassung; Spalte 1, Zeilen 29-59; Spalte 3, Zeilen 6-46; Spalte 4, Zeilen 3-40; Spalte 6, Zeilen 25-27,53-55 und 62-66; Spalte 7, Zeilen 52-58; Spalte 11, Zeilen 14-26; Figuren 2,5 und 10 * | 1-4 | G 01 V |
| | --- -/- | | |

Der vorliegende Recherchenbericht wurde für alle Patentansprüche erstellt.

| Recherchenort DEN HAAG | Abschlußdatum der Recherche 14-01-1983 | Prüfer DATTA S. |
|---|---|---|

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 808 444 (SCHNEEBERGER & HANSEN) <br> * Spalte 1, Zeilen 18-56; Spalte 2, Zeile 28 - Spalte 3, Zeile 31; Spalte 4, Zeile 52 - Spalte 5, Zeile 2; Figuren 1-4 * | 1-3,6, 7 | |
| A | NUCLEAR INSTRUMENTS & METHODS, Band 67, 1969, North-Holland Publishing Co., Amsterdam (NL) J.E. BATEMAN: "Some new scintillator-photodiode detectors for high energy charged particles", Seiten 93-102. * Seite 96, Figur 4a * | 5 | |
| | | | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 14-01-1983 | DATTA S. |